# EUROPÄISCHE PATENTSCHRIFT

(11) **EP 2 236 790 B1**
(45) Veröffentlichungstag und Bekanntmachung des Hinweises auf die Patenterteilung: **30.03.2016**
(21) Anmeldenummer: 09157264.4
(22) Anmeldetag: 03.04.2009
(51) Int. Cl.: F02B 37/00, F02B 37/18, F02B 39/00, F02F 1/24, F02F 1/36, F02B 37/24, F02B 37/007

(54) **Zylinderkopf mit parallel angeordneten Turbinen**
Cylinder head with two turbines arranged in parallel
Culasse comprenant deux turbines en parallèle

(43) Veröffentlichungstag der Anmeldung: 06.10.2010
(73) Patentinhaber: Ford Global Technologies, LLC, Dearborn, MI 48126 (US)
(72) Erfinder: Friedfeldt, Rainer, 50354, Hürth (DE); Borrmann, Dirk, 50354, Huerth (DE); Kuhlbach, Kai, 51427, Bergisch Gladbach (DE)
(74) Vertreter: Drömer, Hans-Carsten

(56) Entgegenhaltungen:
- WO-A-2007/105108
- DE-T5-112006 001 273
- GB-A- 1 220 296
- JP-A- 2 201 026
- JP-A- 2002 303 145
- JP-A- 2006 194 227
- JP-A- 2008 267 257
- JP-U- 62 064 828

## Beschreibung

Die Erfindung betrifft einen Zylinderkopf mit parallel angeordneten Turbinen, der
- mindestens zwei Zylinder aufweist, wobei jeder Zylinder mindestens eine Auslaßöffnung zum Abführen der Abgase aus dem Zylinder aufweist und sich an jede Auslaßöffnung eine Abgasleitung anschließt, und bei dem
- die Abgasleitungen von mindestens zwei Zylindern unter Ausbildung eines integrierten Abgaskrümmers innerhalb des Zylinderkopfes zu einer Gesamtabgasleitung zusammenführen.

Eine Brennkraftmaschine der vorstehenden Art wird beispielsweise in der WO 2007/105108 A beschrieben.

Brennkraftmaschinen verfügen über einen Zylinderblock und einen Zylinderkopf, die zur Ausbildung der einzelnen Zylinder, d.h. Brennräume miteinander verbunden werden. Der Zylinderblock weist zur Aufnahme der Kolben bzw. der Zylinderrohre eine entsprechende Anzahl an Zylinderbohrungen auf. Die Kolben werden axial beweglich in den Zylinderrohren geführt und bilden zusammen mit den Zylinderrohren und dem Zylinderkopf die Brennräume der Brennkraftmaschine aus.

Der Zylinderkopf dient üblicherweise zur Aufnahme des Ventiltriebs. Um den Ladungswechsel zu steuern, benötigt eine Brennkraftmaschine Steuerorgane, beispielsweise Hubventile, und Betätigungseinrichtungen zur Betätigung der Steuerorgane. Im Rahmen des Ladungswechsels erfolgt das Ausschieben der Verbrennungsgase über die Auslaßöffnungen und das Füllen des Brennraums, d.h. das Ansaugen des Frischgemisches bzw. der Frischluft über die Einlaßöffnungen. Der für die Bewegung der Ventile erforderliche Ventilbetätigungsmechanismus einschließlich der Ventile selbst wird als Ventiltrieb bezeichnet.

Es ist die Aufgabe des Ventiltriebes die Einlaß- und Auslaßöffnungen der Brennkammer rechtzeitig freizugeben bzw. zu verschließen, wobei eine schnelle Freigabe möglichst großer Strömungsquerschnitte angestrebt wird, um die Drosselverluste in den ein- bzw. ausströmenden Gasströmungen gering zu halten und eine möglichst gute Füllung des Brennraumes mit Frischgemisch bzw. ein effektives d. h. vollständiges Abführen der Abgase zu gewährleisten. Daher werden Brennkammern auch häufig und zunehmend mit zwei oder mehr Einlaß- bzw. Auslaßöffnungen ausgestattet.

Die Einlaßkanäle, die zu den Einlaßöffnungen führen, und die Auslaßkanäle bzw. Abgasleitungen, die sich an die Auslaßöffnungen anschließen, sind nach dem Stand der Technik zumindest teilweise im Zylinderkopf integriert. Vorliegend werden die Abgasleitungen von mindestens zwei Zylindern innerhalb des Zylinderkopfes zu einer Gesamtabgasleitung zusammengeführt. Die Zusammenführung von Abgasleitungen zu einer Gesamtabgasleitung wird im Allgemeinen und im Rahmen der vorliegenden Erfindung als Abgaskrümmer bezeichnet.

Stromabwärts des Abgaskrümmers werden die Abgase gegebenenfalls weiteren Aggregaten zugeführt, beispielsweise einer Turbine, insbesondere einer Turbine eines Abgasturboladers, und/oder einem Abgasnachbehandlungssystem.

Beim Einsatz eines Abgasturboladers ist man grundsätzlich bemüht, die Turbine des Laders möglichst nahe am Auslaß der Brennkraßmaschine bzw. des Zylinderkopfes anzuordnen, um auf diese Weise die Abgasenthalpie der heißen Abgase, die maßgeblich vom Abgasdruck und der Abgastemperatur bestimmt wird, optimal nutzen zu können und ein schnelles Ansprechverhalten des Turboladers zu gewährleisten. Zudem soll auch der Weg der heißen Abgase zu den verschiedenen Abgasnachbehandlungssystemen möglichst kurz sein, damit den Abgasen wenig Zeit zur Abkühlung eingeräumt wird und die Abgasnachbehandlungssysteme möglichst schnell ihre Betriebstemperatur bzw. Anspringtemperatur erreichen, insbesondere nach einem Kaltstart der Brennkraftmaschine.

Die thermische Trägheit des Teilstücks der Abgasleitungen zwischen Auslaßöffnung am Zylinder und Abgasnachbehandlungssystem bzw. zwischen Auslaßöffnung am Zylinder und Turbine sollte daher auch möglichst gering sein, was durch Reduzierung der Masse und der Länge der entsprechenden Teilstücke erreicht werden kann.

Um die genannten Ziele zu erreichen, ist es sinnvoll die Abgasleitungen - wie bei dem erfindungsgemäßen Zylinderkopf - unter Ausbildung eines integrierten Abgaskrümmers innerhalb des Zylinderkopfes zusammenzuführen. Die Länge der Abgasleitungen wird durch die Integration in den Zylinderkopf verringert, wodurch nicht nur die thermische Trägheit des Abgassystems stromaufwärts einer in der Gesamtabgasleitung vorgesehenen Turbine verringert, sondern auch das Leitungsvolumen d. h. das Abgasvolumen der Abgasleitungen stromaufwärts der Turbine verkleinert wird. Dadurch verbessert sich das Ansprechverhalten der Turbine und die Enthalpie der Abgase am Eintritt in die Turbine erhöht sich.

Während sich eine einzelne Turbine durch Integration des Krümmers ohne weiteres motornah d.h. nahe am Zylinderkopf positionieren läßt, erweist es sich nach dem Stand der Technik aber als problematisch, mehrere Turbinen gleichzeitig motornah anzuordnen, wenn beispielsweise wie bei dem Zylinderkopf, der Gegenstand der vorliegenden Erfindung ist, stromabwärts des Abgaskrümmers zwei parallel angeordnete Turbinen vorzusehen sind.

Häufig werden aufgeladene Brennkraftmaschinen aber mit mehreren Abgasturboladern ausgestattet, um die Drehmomentcharakteristik der Brennkraftmaschine zu verbessern. Hintergrund dieser Maßnahme ist, dass bei Einsatz eines einzelnen Turboladers in der Regel ein starker Drehmomentabfall bei Unterschreiten einer bestimmten Drehzahl zu beobachten ist.

Verständlich wird dieser Drehmomentabfall, wenn berücksichtigt wird, dass das Ladedruckverhältnis vom Turbinendruckverhältnis abhängt. Wird beispielsweise bei einem Dieselmotor die Motordrehzahl verringert bzw. bei einem Ottomotor die Last reduziert, führt dies zu einem kleineren Abgasmassenstrom, der ein kleineres Turbinendruckverhältnis und damit ein kleineres Ladedruckverhältnis zur Folge hat, was einem Drehmomentabfall gleichkommt.

Grundsätzlich kann dabei dem Abfall des Ladedruckes durch eine Verkleinerung des Turbinenquerschnittes und der damit einhergehenden Steigerung des Turbinendruckverhältnisses entgegengewirkt werden. Daher ist es zur Verbesserung der Drehmomentcharakteristik einer aufgeladenen Brennkraftmaschine vorteilhaft, eine einzelne Turbine durch zwei parallel angeordnete Turbinen von kleinerem Turbinenquerschnitt zu ersetzen.

Eine derartige Konfiguration der Turbinen gestattet es beispielweise, eine der beiden Turbinen bei kleineren Abgasmengen zu deaktivieren und das gesamte Abgas einer einzigen Turbine von kleinem Querschnitt zu zuführen, um auf diese Weise bei nur geringen Abgasmengen ausreichend hohe Ladedrücke zu generieren. Überschreitet die Abgasmenge eine vorgebbare Abgasmenge, wird die zweite Turbine aktiviert d. h. zugeschaltet. Zum Aktivieren bzw. Deaktivieren ist ein Steuerelement vorzusehen, welches der Aufteilung des Abgasmassenstroms auf die beiden Turbinen dient.

Bei herkömmlichen Konfigurationen mit zwei Abgasturboladern wird der Abgasstrom außerhalb des Zylinderkopfes in Teilströme aufgespalten, die den beiden Turbinen getrennt zugeführt werden. Hierzu verzweigt sich die Gesamtabgasleitung in zwei separate Abgasleitungen. Stromabwärts der ausgebildeten Verzweigung wird dann in jeder der beiden Abgasleitungen eine einzelne Turbine positioniert. Da die Aufteilung der Gesamtabgasleitung in zwei voneinander getrennte Abgasleitungen eine gewisse Wegstrecke benötigt und die beiden Abgasleitungen auch einen ausreichend großen Abstand zueinander aufweisen müssen, um den Turbinen bzw. den Turbinengehäusen den erforderlichen Bauraum bereitzustellen, ist es nach dem Stand der Technik nicht möglich, beide Turbinen parallel und gleichzeitig motornah anzuordnen.

Vor dem Hintergrund des oben Gesagten ist es die Aufgabe der vorliegenden Erfindung, einen Zylinderkopf gemäß dem Oberbegriff des Anspruchs 1 bereitzustellen, bei dem zwei Turbinen gleichzeitig motornah angeordnet werden können, um eine verbesserte Aufladung zu erreichen.

Gelöst wird diese Aufgabe durch einen Zylinderkopf mit parallel angeordneten Turbinen, der
- mindestens zwei Zylinder aufweist, wobei jeder Zylinder mindestens eine Auslaßöffnung zum Abführen der Abgase aus dem Zylinder aufweist und sich an jede Auslaßöffnung eine Abgasleitung anschließt, und bei dem
- die Abgasleitungen von mindestens zwei Zylindern unter Ausbildung eines integrierten Abgaskrümmers innerhalb des Zylinderkopfes zu einer Gesamtabgasleitung zusammenführen,
und der dadurch gekennzeichnet ist, dass
- stromabwärts des Abgaskrümmers zwei parallel angeordnete Turbinen vorgesehen sind, und
- die zwei Turbinen ein gemeinsames Turbinengehäuse aufweisen, welches zum Zuführen von Abgas mit einem Eintrittsbereich ausgestattet ist, wobei im Gehäuse ein Steuerelement zur Aufteilung des Abgasstroms auf die beiden Turbinen vorgesehen ist.

Erfindungsgemäß weisen zwei parallel angeordnete Turbinen ein gemeinsames Turbinengehäuse auf. Die Versorgung beider Turbinen mit Abgas erfolgt dabei über einen gemeinsamen Eintrittsbereich.

Die Aufteilung des via Krümmer abgeführten Abgasstroms auf die Turbinen erfolgt im Turbinengehäuse selbst, sofern der momentane Betrieb der Brennkraftmaschine dies erfordert bzw. vorsieht, weshalb beide Turbinen motornah am Zylinderkopf positioniert werden können. Hierzu ist ein Steuerelement im Gehäuse vorgesehen.

Neben den bereits genannten Vorteilen einer motornahen Anordnung der Turbinen gestattet die erfindungsgemäße Ausbildung der beiden parallel angeordneten Turbinen in einem einzelnen gemeinsamen Gehäuse ein dichtes Packaging der gesamten Antriebseinheit.

Erfindungsgemäß ist das Turbinengehäuse zumindest teilweise im Zylinderkopf integriert, so dass der Zylinderkopf und zumindest ein Teil des Turbinengehäuses ein monolithisches Bauteil bilden.

Prinzipbedingt entfällt durch die einteilige Ausbildung die Notwendigkeit einer gasdichten, thermisch hochbelastbaren und kostenintensiven Verbindung von Zylinderkopf und Turbinengehäuse, was Kostenvorteile bietet. Es besteht auch nicht die Gefahr, dass Abgas infolge einer Leckage ungewollt in die Umgebung austritt.

Es kann eine besonders motornahe Anordnung der Turbinen realisiert werden, weil ein Zugriff für Montagewerkzeuge nicht mehr vorgesehen werden muß, was die konstruktive Auslegung des Turbinengehäuses vereinfacht und eine Optimierung hinsichtlich des Betriebs der Turbinen gestattet. Das Gehäuse kann vergleichsweise kleinvolumig ausgebildet und die Laufräder der Turbinen können in der Nähe zum Eintrittsbereich angeordnet werden, was bei Berücksichtigung eines Montagezugriffs nicht ohne weiteres möglich ist.

Sind das Turbinengehäuse und der Zylinderkopf flüssigkeitsgekühlt und soll ein im Turbinengehäuse integrierter Kühlmittelmantel via Zylinderkopf mit Kühlmittel versorgt werden, macht eine zumindest teilweise Integration des Turbinengehäuses in den Zylinderkopf das Verbinden der beiden Kühlkreisläufe bzw. Kühlmittelmäntel entbehrlich.

Dabei kann auch ein im Zylinderkopf integrierter Kühlmittelmantel den im Gehäuse vorgesehenen Kühlmittelmantel mit ausbilden, so dass eine Verbindung von zwei originär unabhängigen Kühlmänteln im eigentlichen Sinne nicht mehr vorliegt bzw. auszubilden ist. Bezüglich der Kühlmittelkreisläufe bzw. dem Verbinden der Kühlmittelmäntel und der Leckage von Kühlmittel gilt das im Hinblick auf den Abgasstrom bereits Gesagte in analoger Weise.

Eine Ölversorgungsleitung kann ebenfalls implementiert werden, d.h. die Versorgung der Turbinen mit Öl zwecks Schmierung der Turbinenwellen kann über eine Leitung erfolgen, welche in den Zylinderkopf und das Gehäuse integriert ist. Eine externe Leitung zur Ölversorgung wird vermieden und damit die Ausbildung und Abdichtung der Verbindungsstellen zwischen Leitung und Gehäuse bzw. zwischen Leitung und Zylinderkopf. Das Öl kann dem Zylinderkopf entnommen und dem Gehäuse bzw. den Turbinen zugeführt werden, ohne dass die Gefahr einer Leckage besteht. Des Weiteren führt die Integration der Leitung zu einer Verringerung der Anzahl an Bauteilen und zu einer kompakteren Bauweise.

Mit dem erfindungsgemäßen Zylinderkopf wird somit die der Erfindung zugrunde liegende Aufgabe gelöst, nämlich einen Zylinderkopf bereitzustellen, bei dem zwei Turbinen gleichzeitig motornah angeordnet werden können, um eine verbesserte Aufladung zu erreichen.

Weitere vorteilhafte Ausführungsformen des Zylinderkopfes werden in Zusammenhang mit den Unteransprüchen erörtert.

Vorteilhafterweise wird das monolithische Bauteil als gegossenes Bauteil ausgebildet, vorzugsweise aus Aluminium, wodurch eine besonders hohe Gewichtsersparnis erzielt wird im Vergleich zur Verwendung von Stahl. Die Kosten für die Bearbeitung des Aluminiumgehäuses sind ebenfalls geringer.

Nichtsdestotrotz kann das monolithische Bauteil auch aus Grauguß oder anderen Gußmaterialien hergestellt werden. Denn unabhängig vom verwendeten Material bleiben die Vorteile eines monolithisch ausgebildeten Bauteils gemäß der in Rede stehenden Ausführungsform erhalten, beispielsweise die kompakte Bauweise, die Gewichts- und Bauraumersparnis durch den Wegfall der nicht notwendigen Verbindungen und Verbindungselemente und das verbesserte Ansprechverhalten der Turbinen infolge der überaus motornahen Anordnung.

Falls es sich um Turbinen eines Abgasturboladers handelt, sind in diesem Zusammenhang auch Ausführungsformen vorteilhaft, bei denen die Welle des Abgasturboladers mitsamt dem vormontierten Turbinen- und Verdichterlaufrad als eigenständige vorgefertigte Baugruppe, beispielsweise in Form einer Kassette, in das im Zylinderkopf integrierte Turbinengehäuse bzw. Turboladergehäuse eingeschoben wird. Dies verkürzt die Montagezeit erheblich.

Dabei nimmt das Gehäuse nicht nur Turbinenkomponenten, sondern auch Teile des Verdichters auf, was grundsätzlich d. h. bei sämtlichen erfindungsgemäßen Ausführungsformen der Fall sein kann, soweit ein Abgasturbolader eingesetzt wird d.h. mindestens eine Turbine Teil eines Abgasturboladers ist. Insoweit dient das Gehäuse auch als Verdichtergehäuse.

Vorteilhaft sind Ausführungsformen des Zylinderkopfes, bei denen der Zylinderkopf mit einem zumindest teilweise im Zylinderkopf integrierten Kühlmittelmantel ausgestattet ist.

Der erfindungsgemäße Zylinderkopf verfügt über einen integrierten Abgaskrümmer und ist daher thermisch höher belastet als ein herkömmlicher Zylinderkopf, der mit einem externen Krümmer ausgestattet ist, weshalb höhere Anforderungen an die Kühlung gestellt werden.

Grundsätzlich besteht die Möglichkeit, die Kühlung in Gestalt einer Luftkühlung oder einer Flüssigkeitskühlung auszuführen. Aufgrund der wesentlich höheren Wärmekapazität von Flüssigkeiten gegenüber Luft können mit der Flüssigkeitskühlung aber wesentlich größere Wärmemengen abgeführt werden als dies mit einer Luftkühlung möglich ist.

Die Flüssigkeitskühlung erfordert die Ausstattung des Zylinderkopfes mit einem Kühlmittelmantel d.h. die Anordnung von das Kühlmittel durch den Zylinderkopf führenden Kühlmittelkanälen. Die Wärme wird bereits im Inneren des Zylinderkopfes an das Kühlmittel, in der Regel mit Additiven versetztes Wasser, abgegeben. Das Kühlmittel wird dabei mittels einer im Kühlkreislauf angeordneten Pumpe gefördert, so dass es im Kühlmittelmantel zirkuliert. Die an das Kühlmittel abgegebene Wärme wird auf diese Weise aus dem Inneren des Zylinderkopfes abgeführt und in einem Wärmetauscher dem Kühlmittel wieder entzogen.

Vorzugsweise sollte die Kühlleistung derart hoch sein, dass auf eine Anfettung (λ < 1) zur Absenkung der Abgastemperaturen, die hinsichtlich des Kraftstoffverbrauchs der Brennkraftmaschine und hinsichtlich der Schadstoffemissionen als nachteilig anzusehen ist, verzichtet werden kann. Denn im Rahmen einer Anfettung wird mehr Kraftstoff eingespritzt als mit der bereitgestellten Luftmenge überhaupt verbrannt werden kann, wobei der zusätzliche Kraftstoff ebenfalls erwärmt und verdampft wird, so dass die Temperatur der Verbrennungsgase sinkt. Insbesondere gestattet es eine Anfettung nicht, die Brennkraftmaschine immer in der Weise zu betreiben, wie es beispielsweise für ein vorgesehenes Abgasnachbehandlungssystem erforderlich wäre. D. h. es ergeben sich Einschränkungen beim Betrieb der Brennkraftmaschine.

Ist eine der Turbinen Teil eines Abgasturboladers ist eine Flüssigkeitskühlung des Zylinderkopfes auch deshalb vorteilhaft, weil der Zylinderkopf einer aufgeladenen Brennkraftmaschine thermisch höher belastet ist als der Zylinderkopf eines herkömmlichen Saugmotors.

Vorteilhaft sind Ausführungsformen des Zylinderkopfes, bei denen das Turbinengehäuse zur Ausbildung einer Flüssigkeitskühlung mit mindestens einem Kühlmittelmantel ausgestattet ist.

Auf die Verwendung thermisch hochbelastbarer Werkstoffe zur Herstellung der Turbine bzw. des Turbinengehäuses kann dann vollständig oder zumindest teilweise verzichtet werden. Der Einsatz kostenintensiver - häufig nickelhaltiger - Werkstoffe ist dann nicht mehr erforderlich bzw. stark reduziert.

Eine derartige Kühlung des Gehäuses hat auch bezüglich des Steuerelements Vorteile, welches erfindungsgemäß im Gehäuse, beispielsweise im Eintrittsbereich, angeordnet ist. Im Gegensatz zu Ausführungen nach dem Stand der Technik, bei denen das Steuerelement zur Aufteilung des Abgasstromes auf einem ungekühlten Teilstück der Gesamtabgasleitung bzw. einer Abgasleitung angeordnet ist, kann der im Zylinderkopf bzw. im Turbinengehäuse integrierte Kühlmittelmantel erfindungsgemäß zur Kühlung des Steuerelementes herangezogen werden.

Die thermische Belastung des Steuerelementes nimmt dadurch ab. Aufgrund der Kühlung kann auf die Verwendung kostenintensiver wärmebeständiger Werkstoffe zur Ausbildung des Steuerelements verzichtet werden.

Weist der Zylinderkopf einen zumindest teilweise integrierten Kühlmittelmantel auf, sind - wie bereits erwähnt - Ausführungsformen vorteilhaft, bei denen das Turbinengehäuse zur Ausbildung einer Flüssigkeitskühlung mit mindestens einem Kühlmittelmantel ausgestattet ist, der mit dem im Zylinderkopf integrierten Kühlmittelmantel verbunden ist.

Dies gilt sowohl für Ausführungsformen, bei denen das Turbinengehäuse und der Zylinderkopf separate Bauteile darstellen, als auch für Ausführungsformen, bei denen das Gehäuse und der Zylinderkopf ein monolithisches Bauteil bilden.

Ein Verbinden der beiden Kühlmittelkreisläufe gestattet es, beide Kreisläufe mit einer gemeinsamen Pumpe und einem gemeinsamen Wärmetauscher auszustatten und auf diese Weise die Anzahl der Bauteile zu reduzieren und die Kosten zu senken.

Vorteilhaft sind Ausführungsformen, bei denen das Steuerelement ein Ventil, ein Schieber, eine Klappe oder dergleichen ist.

Vorteilhaft sind Ausführungsformen, bei denen das Steuerelement elektrisch, hydraulisch, pneumatisch, mechanisch oder magnetisch steuerbar ist, vorzugsweise mittels der Motorsteuerung der Brennkraftmaschine.

Vorteilhaft sind Ausführungsformen, bei denen das Steuerelement zweistufig schaltbar ausgerührt ist, was die Steuerung vereinfacht und insbesondere Kostenvorteile bietet. Dabei wird eine der beiden Turbinen bei geringen Abgasmengen gemäß einem ersten Schaltungszustand verschlossen, um den Zustrom von Abgas zu unterbinden, oder aber bei größeren Abgasmengen gemäß einem zweiten Schaltungszustand geöffnet, um diese Turbine mit Abgas zu beaufschlagen. Die Turbine fungiert dann als zuschaltbare Turbine, die mittels Steuerelement aktiviert bzw. deaktiviert wird.

Das Steuerelement kann aber auch gemäß einer anderen Ausführungsform stufenlos schaltbar sein, um einen sprunghaften Drehmomentabfall bzw. Drehmomentanstieg bei Betätigen des Steuerelements zu vermeiden.

Vorteilhaft sind daher auch Ausführungsformen des Zylinderkopfes, bei denen das Steuerelement stufenlos verstellbar ist.

Vorteilhaft sind Ausführungsformen des Zylinderkopfes, bei denen jeder Zylinder mindestens zwei Auslaßöffnungen zum Abführen der Abgase aus dem Zylinder aufweist. Wie bereits erwähnt, ist es während des Ausschiebens der Abgase im Rahmen des Ladungswechsels ein vorrangiges Ziel, möglichst schnell möglichst große Strömungsquerschnitte freizugeben, um ein effektives Abführen der Abgase zu gewährleisten, weshalb das Vorsehen von mehr als einer Auslaßöffnung vorteilhaft ist.

Vorteilhaft sind dabei Ausführungsformen, bei denen zunächst die Abgasleitungen der mindestens zwei Auslaßöffnungen jedes Zylinders zu einer dem Zylinder zugehörigen Teilabgasleitung zusammenführen bevor die Teilabgasleitungen von mindestens zwei Zylindern zu der Gesamtabgasleitung zusammenführen.

Die Gesamtwegstrecke aller Abgasleitungen wird hierdurch verkürzt. Das stufenweise Zusammenführen der Abgasleitungen zu einer Gesamtabgasleitung trägt zudem zu einer kompakteren d. h. weniger voluminösen Bauweise des Zylinderkopfes und damit insbesondere zu einer Gewichtsreduzierung und einem effektiveren Packaging im Motorraum bei.

Vorteilhaft können aber auch Ausführungsformen des Zylinderkopfes sein, bei denen jeder Zylinder eine Auslaßöffnung zum Abführen der Abgase aus dem Zylinder aufweist.

Jede der beiden eingesetzten Turbinen kann mit einer variablen Turbinengeometrie ausgestattet werden, die eine weitgehende Anpassung an den jeweiligen Betriebspunkt der Brennkraftmaschine durch Verstellen der Turbinengeometrie bzw. des wirksamen Turbinenquerschnittes gestattet. Dabei sind stromaufwärts des Laufrades der Turbine Leitschaufeln zur Beeinflussung der Strömungsrichtung angeordnet. Im Gegensatz zu den Laufschaufeln des umlaufenden Laufrades rotieren die Leitschaufeln nicht mit der Welle der Turbine d.h. dem Laufrad. Die Leitschaufeln sind zwar stationär angeordnet, aber nicht völlig unbeweglich, sondern um ihre Achse drehbar, so dass auf die Anströmung der Laufschaufeln Einfluß genommen werden kann.

Verfügt eine Turbine hingegen über eine feste unveränderliche Geometrie, sind die Leitschaufeln nicht nur stationär, sondern zudem völlig unbeweglich d. h. starr fixiert.

Wird eine der beiden Turbinen mit einer variablen Turbinengeometrie ausgestattet, kann diese Turbine als Steuerelement zur Aufteilung des Abgasstroms dienen. Denn wird der Strömungsquerschnitt dieser Turbine durch Verstellen der Leitschaufeln verkleinert, erhöht sich der Strömungswiderstand dieser Turbine und es wird mehr Abgas auf die andere Turbine geleitet bzw. umgeleitet.

Zum Betreiben einer Brennkraftmaschine mit einem Zylinderkopf einer zuvor beschriebenen Ausführungsform wird
- eine der beiden Turbinen als zuschaltbare Turbine ausgebildet,
- bei geringen Abgasmengen diese zuschaltbare Turbine deaktiviert, indem der Zustrom von Abgas zu dieser Turbine mittels Steuerelement unterbunden wird, und
- bei zunehmender Abgasmenge diese zuschaltbare Turbine durch Betätigen des Steuerelements aktiviert und mit Abgas beaufschlagt, sobald die Abgasmenge eine vorgebbare Abgasmenge überschreitet.

Wird der erfindungsgemäße Zylinderkopf für eine Brennkraftmaschine mit Quantitätsregelung verwendet, bei der die Last über die Menge an Frischgemisch gesteuert wird, bedeutet die erfindungsgemäße Vorgehensweise beim Betreiben dieser Brennkraftmaschine, dass die zuschaltbare Turbine aktiviert wird, wenn - eine konkrete Drehzahl vorausgesetzt - die Last der Brennkraftmaschine eine vorgebbare Last übersteigt, da die Abgasmenge bei einer derartigen Brennkraftmaschine maßgeblich von der Last abhängt, wobei die Abgasmenge mit zunehmender Last steigt und mit abnehmender Last sinkt.

Liegt der Brennkraftmaschine hingegen eine Qualitätsregelung zugrunde, bei der die Last über die Zusammensetzung des Frischgemischs gesteuert wird und sich die Abgasmenge im wesentlichen mit der Drehzahl ändert, wird gemäß dem erfindungsgemäßen Verfahren zum Betreiben dieser Brennkraftmaschine die zuschaltbare Turbine aktiviert, wenn die Drehzahl der Brennkraftmaschine eine vorgebbare Drehzahl übersteigt, da die Abgasmenge vorliegend mit zunehmender Drehzahl steigt und mit abnehmender Drehzahl sinkt.

Handelt es sich um eine - insbesondere mittels Abgasturboaufladung - aufgeladene Brennkraftmaschine, muß zusätzlich berücksichtigt werden, dass sich der Ladedruck auf der Ansaugseite mit der Last und/oder der Drehzahl ändern kann und Einfluß auf die Abgasmenge hat. Die vorstehenden und vereinfacht dargestellten Zusammenhänge zwischen der Abgasmenge und der Last bzw. Drehzahl gelten dann folglich nicht in dieser allgemeinen Form. Daher stellt das erfindungsgemäße Verfahren ganz allgemein auf die Abgasmenge ab und nicht auf die Last bzw. Drehzahl.

Vorteilhaft sind Varianten, bei denen die zuschaltbare Turbine nur dann aktiviert wird, wenn die Abgasmenge der Brennkraftmaschine eine vorgebbare Abgasmenge übersteigt und für eine vorgebbare Zeitspanne Δt₁ größer ist als diese vorgebbare Abgasmenge.

Die Einführung einer zusätzlichen Bedingung für das Aktivieren der zuschaltbaren Turbine soll einen zu häufigen Moduswechsel verhindern, wenn die Abgasmenge nur kurzzeitig eine vorgebbare Abgasmenge überschreitet und dann wieder fällt bzw. um den vorgegebenen Wert für die Abgasmenge schwankt, ohne dass das Überschreiten ein Aktivieren der zweiten Turbine rechtfertigen würde.

Beim Deaktivieren der zuschaltbaren Turbine wird vorteilhafterweise analog vorgegangen. D. h. die zuschaltbare Turbine wird wieder deaktiviert, sobald die Abgasmenge eine vorgebbare Abgasmenge unterschreitet.

Vorteilhaft sind dann Varianten, bei denen die Deaktivierung vorgenommen wird, wenn die Abgasmenge die vorgebbare Abgasmenge unterschreitet und für eine vorgebbare Zeitspanne Δt₂ kleiner ist als die vorgebbare Abgasmenge.

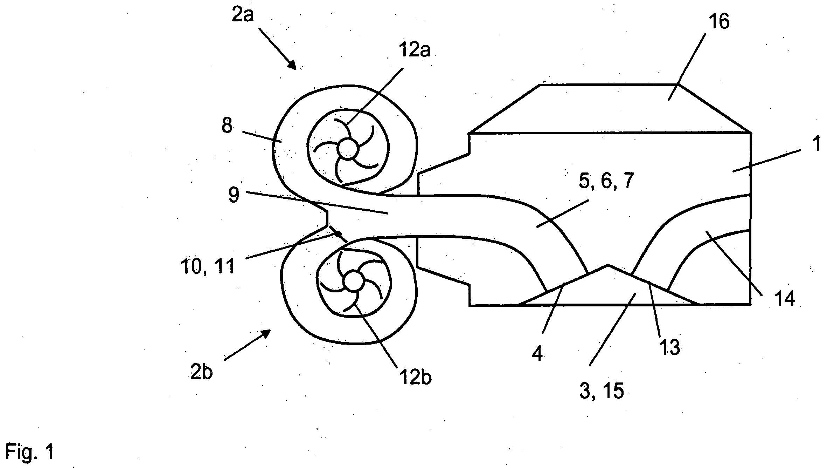

Im Folgenden wird die Erfindung anhand eines Ausführungsbeispiels gemäß der Figur 1 näher beschrieben. Hierbei zeigt:
Fig. 1 im Querschnitt eine erste Ausführungsform des Zylinderkopfes mit zwei parallel angeordneten Turbinen.
Figur 1 zeigt im Querschnitt eine erste Ausführungsform des Zylinderkopfes 1 mit zwei parallel angeordneten Turbinen 2a, 2b.

Beide Turbinen 2a, 2b d. h. die Laufräder 12a, 12b dieser beiden Turbinen 2a, 2b sind parallel und in einem gemeinsamen Turbinengehäuse 8 angeordnet, welches zum Zuführen von Abgas mit einem Eintrittsbereich 9 ausgestattet ist. Im Gehäuse 8 bzw. Eintrittsbereich 9 ist ein Steuerelement 10 in Gestalt einer Klappe 11 zur Aufteilung des Abgasstroms auf die beiden Turbinen 2a, 2b vorgesehen, wobei eine Turbine 2b als zuschaltbare Turbine 2b ausgebildet ist. Die zuschaltbare Turbine 2b ist in dem in Figur 1 dargestellten Schaltungszustand des Steuerelements 10 deaktiviert d. h. der Zustrom von Abgas zu dieser Turbine 2b wird im momentanen Betriebszustand unterbunden und das gesamte Abgas durch die andere erste Turbine 2a geleitet. Das Turbinengehäuse 8 ist teilweise im Zylinderkopf 1 integriert, so dass der Zylinderkopf 1 und ein Teil des Turbinengehäuses 8 ein monolithisches Bauteil bilden.

Der Zylinderkopf 1 ist an einer Montage-Stirnseite zur Ausbildung von Brennräumen 15 mit einem Zylinderblock verbindbar. Der Zylinder 3 weist eine Einlaßöffnung 13 auf, über welche der Brennraum 15 via Ansaugleitung 14 im Rahmen des Ladungswechsels mit Frischgemisch versorgt wird. Das Ausschieben der Verbrennungsgase erfolgt via Auslaßöffnung 4, an welche sich eine Abgasleitung 5 anschließt.

Die Abgasleitungen 5 führen unter Ausbildung eines integrierten Abgaskrümmers 6 innerhalb des Zylinderkopfes 1 zu einer Gesamtabgasleitung 7 zusammen, wobei die Gesamtabgasleitung 7 in den Eintrittsbereich 9 des Gehäuses 8 mündet bzw. übergeht. Von dort werden die heißen Abgase mittels Steuerelement 10 auf beide Turbinen 2a, 2b verteilt, wodurch die Laufräder 12a, 12b in Drehung versetzt werden.

Der Zylinderkopf 1 ist mit einem integrierten Kühlmittelmantel ausgestattet, der mit einem im Turbinengehäuse 8 integrierten Kühlmittelmantel verbunden ist (nicht dargestellt). Der Ventiltrieb ist mit einer Ventilhaube 16 abgedeckt.

Durch Betätigen des Steuerelements 10 d. h. durch Verschwenken der drehbar gelagerten Klappe 11 wird die zuschaltbare Turbine 2b aktiviert.

### Bezugszeichen

- 1: Zylinderkopf
- 2a: erste Turbine
- 2b: zweite Turbine, zuschaltbare Turbine
- 3: Zylindern
- 4: Auslaßöffnung
- 5: Abgasleitung
- 6: Abgaskrümmer
- 7: Gesamtabgasleitung
- 8: Turbinengehäuse
- 9: Eintrittsbereich
- 10: Steuerelement
- 11: Klappe
- 12a: Laufrad
- 12b: Laufrad
- 13: Einlaßöffnung
- 14: Ansaugleitung
- 15: Brennraum
- 16: Ventilhaube

## Patentansprüche

1. Zylinderkopf (1) mit parallel angeordneten Turbinen (2a, 2b), der
- mindestens zwei Zylinder (3) aufweist, wobei jeder Zylinder (3) mindestens eine Auslaßöffnungen (4) zum Abführen der Abgase aus dem Zylinder (3) aufweist und sich an jede Auslaßöffnung (4) eine Abgasleitung (5) anschließt, und bei dem
- die Abgasleitungen (5) von mindestens zwei Zylindern (3) unter Ausbildung eines integrierten Abgaskrümmers (6) innerhalb des Zylinderkopfes (1) zu einer Gesamtabgasleitung (7) zusammenführen,
**dadurch gekennzeichnet, dass**
- stromabwärts des Abgaskrümmers (6) zwei parallel angeordnete Turbinen (2a, 2b) vorgesehen sind, und
- die zwei Turbinen (2a, 2b) ein gemeinsames Turbinengehäuse (8) aufweisen, welches zum Zuführen von Abgas mit einem Eintrittsbereich (9) ausgestattet ist, wobei im Gehäuse (8) ein Steuerelement (10) zur Aufteilung des Abgasstroms auf die beiden Turbinen (2a, 2b) vorgesehen ist und das Turbinengehäuse (8) zumindest teilweise im Zylinderkopf (1) integriert ist, so dass der Zylinderkopf (1) und zumindest ein Teil des Turbinengehäuses (8) ein monolithisches Bauteil bilden.

2. Zylinderkopf (1) nach Anspruch 1, **dadurch gekennzeichnet, dass** der Zylinderkopf (1) mit einem zumindest teilweise im Zylinderkopf (1) integrierten Kühlmittelmantel ausgestattet ist.

3. Zylinderkopf (1) nach Anspruch 1 oder 2, **dadurch gekennzeichnet, dass** das Turbinengehäuse (8) zur Ausbildung einer Flüssigkeitskühlung mit mindestens einem Kühlmittelmantel ausgestattet ist.

4. Zylinderkopf (1) nach Anspruch 2, **dadurch gekennzeichnet, dass** das Turbinengehäuse (8) zur Ausbildung einer Flüssigkeitskühlung mit mindestens einem Kühlmittelmantel ausgestattet ist, der mit dem im Zylinderkopf (1) integrierten Kühlmittelmantel verbunden ist.

5. Zylinderkopf (1) nach einem der vorherigen Ansprüche, **dadurch gekennzeichnet, dass** das Steuerelement (10) zweistufig schaltbar ausgeführt ist

6. Zylinderkopf (1) nach einem der Ansprüche 1 bis 4, **dadurch gekennzeichnet, dass** das Steuerelement (10) stufenlos verstellbar ist.

7. Zylinderkopf (1) nach einem der vorherigen Ansprüche, **dadurch gekennzeichnet, dass** jeder Zylinder (3) mindestens zwei Auslaßöffnungen (4) zum Abführen der Abgase aus dem Zylinder (3) aufweist.

## Claims

1. Cylinder head (1) having turbines (2a, 2b) arranged in parallel, which cylinder head (1)
- has at least two cylinders (3), with each cylinder (3) having at least one outlet openings (4) for discharging the exhaust gases out of the cylinder (3) and with an exhaust line (5) adjoining each outlet opening, and in which cylinder head (1)
- the exhaust lines (5) of at least two cylinders (3) converge into an overall exhaust line (7) within the cylinder head (1) so as to form an integrated exhaust manifold (6),
**characterized in that**
- two turbines (2a, 2b) which are arranged in parallel are provided downstream of the exhaust manifold (6), and
- the two turbines (2a, 2b) have a common turbine housing (8) which, for the supply of exhaust gas, is provided with an inlet region (9), a control element (10) for splitting up the exhaust-gas flow between the two turbines (2a, 2b) being provided in the housing (8) and the turbine housing (8) being at least partially integrated in the cylinder head (1) such that the cylinder head (1) and at least a part of the turbine housing (8) form a monolithic component.

2. Cylinder head (1) according to Claim 1, **characterized in that** the cylinder head (1) is equipped with a coolant jacket which is at least partially integrated in the cylinder head (1).

3. Cylinder head (1) according to Claim 1 or 2, **characterized in that** the turbine housing (8) is equipped with at least one coolant jacket in order to form a liquid cooling arrangement.

4. Cylinder head (1) according to Claim 2, **characterized in that** the turbine housing (8) is equipped with at least one coolant jacket in order to form a liquid cooling arrangement, which coolant jacket is connected to the coolant jacket which is integrated in the cylinder head (1).

5. Cylinder head (1) according to one of the preceding claims, **characterized in that** the control element (10) is designed such that it can be switched in a two-stage fashion.

6. Cylinder head (1) according to one of Claims 1 to 4, **characterized in that** the control element (10) can be adjusted in a continuously variable fashion.

7. Cylinder head (1) according to one of the preceding claims, **characterized in that** each cylinder (3) has at least two outlet openings (4) for discharging the exhaust gases out of the cylinder (3).

## Revendications

1. Culasse (1) comprenant des turbines (2a, 2b) disposées en parallèle,
- qui présente au moins deux cylindres (3), chaque cylindre (3) présentant au moins une ouvertures de sortie (4) pour l'évacuation des gaz d'échappement hors du cylindre (3) et une conduite de gaz d'échappement (5) se raccordant à chaque ouverture de sortie (4), et dans laquelle
- les conduites de gaz d'échappement (5) d'au moins deux cylindres (3) se rejoignent en formant un collecteur de gaz d'échappement intégré (6) à l'intérieur de la culasse (1) pour former une conduite de gaz d'échappement commune (7),
**caractérisée en ce que**
- deux turbines (2a, 2b) disposées en parallèle sont prévues en aval du collecteur de gaz d'échappement (6), et
- les deux turbines (2a, 2b) présentent un boîtier de turbine commun (8) qui est muni d'une région d'entrée (9) pour l'acheminement de gaz d'échappement, un élément de commande (10) étant prévu dans le boîtier (8) pour diviser le flux de gaz d'échappement vers les deux turbines (2a, 2b), et le boîtier de turbine (8) étant intégré au moins en partie dans la culasse (1), de telle sorte que la culasse (1) et au moins une partie du boîtier de turbine (8) forment un composant monolithique.

2. Culasse (1) selon la revendication 1, **caractérisée en ce que** la culasse (1) est pourvue d'une enveloppe de réfrigérant intégrée au moins en partie dans la culasse (1).

3. Culasse (1) selon la revendication 1 ou 2, **caractérisée en ce que** le boîtier de turbine (8) est pourvu d'au moins une enveloppe de réfrigérant pour réaliser un refroidissement liquide.

4. Culasse (1) selon la revendication 2, **caractérisée en ce que** le boîtier de turbine (8) est pourvu d'au moins une enveloppe de réfrigérant pour réaliser un refroidissement liquide, laquelle enveloppe de réfrigérant est connectée à l'enveloppe de réfrigérant intégrée dans la culasse (1).

5. Culasse (1) selon l'une quelconque des revendications précédentes, **caractérisée en ce que** l'élément de commande (10) est réalisé de manière à pouvoir être commuté sur deux étages.

6. Culasse (1) selon l'une quelconque des revendications 1 à 4, **caractérisée en ce que** l'élément de commande (10) peut être réglé en continu.

7. Culasse (1) selon l'une quelconque des revendications précédentes, **caractérisée en ce que** chaque cylindre (3) présente au moins deux ouvertures de sortie (4) pour évacuer les gaz d'échappement hors du cylindre (3).
